Europäisches Patentamt

European Patent Office

Office européen des brevets

(11) Publication number: **0 089 554**
**B1**

# (12) EUROPEAN PATENT SPECIFICATION

(45) Date of publication of patent specification: **18.12.85**

(51) Int. Cl.⁴: **F 16 D 65/12,** F 16 D 65/847

(21) Application number: **83102322.1**

(22) Date of filing: **09.03.83**

(54) **Disk brake rotor.**

(30) Priority: **19.03.82 JP 42899/82**

(43) Date of publication of application:
**28.09.83 Bulletin 83/39**

(45) Publication of the grant of the patent:
**18.12.85 Bulletin 85/51**

(84) Designated Contracting States:
**DE FR GB**

(56) References cited:
**DE-A-2 557 649**
**DE-A-3 026 886**
**DE-U-6 812 789**
**DE-U-6 946 818**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Tokunaga, Masayuki**
**35-5, Kugahara 3-chome**
**Ota-ku Tokyo (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

This invention relates to a disc brake rotor.

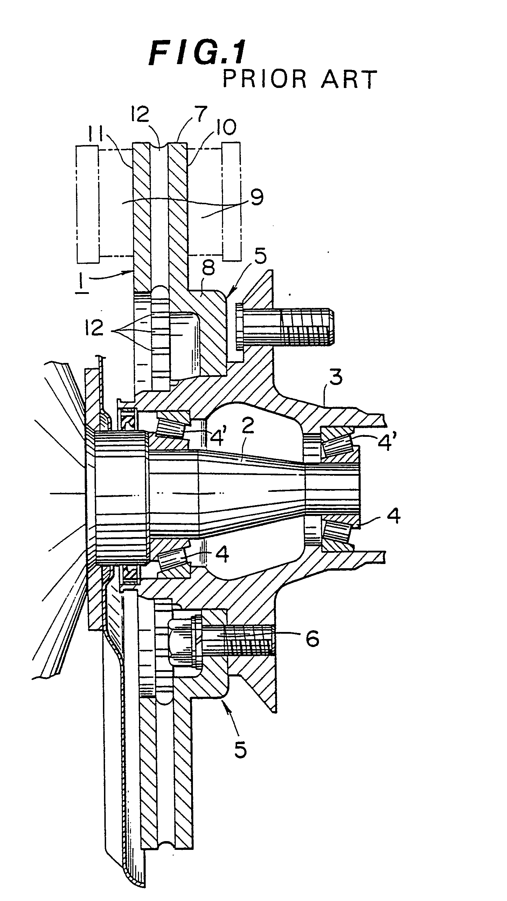

Fig. 1 shows a conventional disc brake rotor 1. The disc brake rotor 1 is of a ventilated type and includes a spindle 2, a wheel hub 3 supported through bearings 4, 4' by the spindle 2. A fitting portion 5 of the disc brake rotor 1 is fixed to the wheel hub 3 by means of bolts 6 so that the disc brake rotor 1 can rotate together with a wheel (not shown). A circular brake pad engaging portion 7 is placed in an offset position in the rotation axis direction by way of a step portion 8 extending perpendicular to the fixing portion 5 of the disc brake rotor 1. A pair of brake pads 9 are placed at both sides of the brake pad engaging portion 7. When the brake pads 9 are pressed against opposite brake pad engaging surfaces 10, 11 of the brake pad engaging portion 7, the brake rotor 1 is braked.

Many cooling fins 12 are fixed between the brake pad engaging surfaces 10, 11 of the brake pad engaging portion 7 in radial directions. Friction heat produced during braking is transmitted by way of the step portion 8 and the fitting portion 5 to the wheel hub 3 so as to cool the brake rotor 1. In addition, the friction heat is radiated by means of the cooling fins 12 into the atmosphere.

In such a conventional structure, the rigidity of the disc brake rotor is low because the fitting portion 5 and the brake pad engaging portion 7 are joined by the step portion 8 extending perpendicular thereto. Also, because an area in section of the step portion 8 is small, the cooling efficiency is poor.

A ventilated type disc brake rotor is known from DE—U—69 46 818, which is attached to a wheel hub by a fitting portion. The disc brake rotor comprises a brake pad engaging portion which is connected to the fitting portion by a step portion. A plurality of separate fins are provided on the step portion which are fixed on the outer periphery of said step portion and which project radially outwards of said step portion. The fins are further fixed at one of their side ends to the brake pad engaging portion. The fins are provided to produce an airstream while the disc brake rotor is rotated together with the wheel to which it is fixed. The airstream should provide a sufficient cooling effect of the disc brake rotor during or after a braking action. Due to their configuration, the fins produce an airstream which is in a direction radially outwards of the fitting portion. This type of disc brake rotor has the drawback that it is very difficult to supply the radial inner portion of said fins with a sufficient amount of fresh air which is able to provide a cooling effect for the disc brake.

In DE—A—25 57 649, corresponding to the preamble of claim 1, a disc brake is disclosed which comprises a fitting portion and a brake pad engaging portion which are connected by a plurality of fins projecting outwards from the radial outside of the fitting portion to the radial inside of the brake pad engaging portion. In this embodiment, the fins are provided to produce a cooling airstream to cool the brake pad engaging portions during or after a braking action. This disc brake has the drawback that the rigidity is low because the fitting portion and the brake pad engaging portion are joined only by the fins. Furthermore, the fins produce an airstream which is directed radially outwards from the fins. The air which is transported by said fins has to be replaced by an airstream which is only supplied in an axial direction. Therefore, the supply of fresh cooling air is not sufficient.

Therefore, it is an object of the present invention to provide a disc brake rotor of the type discussed in the preamble portion of claim 1 which is sufficiently rigid and produces an adequate stream of cooling air during rotation.

According to this invention, the object is solved in that the air ducts are formed in the step portion and are extending in radial direction, the radially outer mouth of each air duct opening outside of the face of the brake pad engaging portion adjacent the fins.

According to a further embodiment of the invention, grooves are formed in radial direction in the fitting portion to join continuously to the air ducts.

According to the invention, the configuration of a step portion which connects a fitting portion of a disc brake rotor with a brake pad engaging portion thereof is improved in such a way that the step portion can be reinforced.

A plurality of cooling fins are separately provided at the outer periphery of the step portion. The area in section of the step portion can be increased so that the heat transmission efficiency and air blowing characteristics can be improved.

A preferred embodiment is described in the following description and is illustrated in the accompanying drawings.

Figure 1 is a schematic sectional view showing a prior art disc brake rotor;

Figure 2 is a schematic vertical sectional view showing a disc brake rotor according to this invention; and

Figure 3 is a front view showing the disc brake rotor shown in Figure 2.

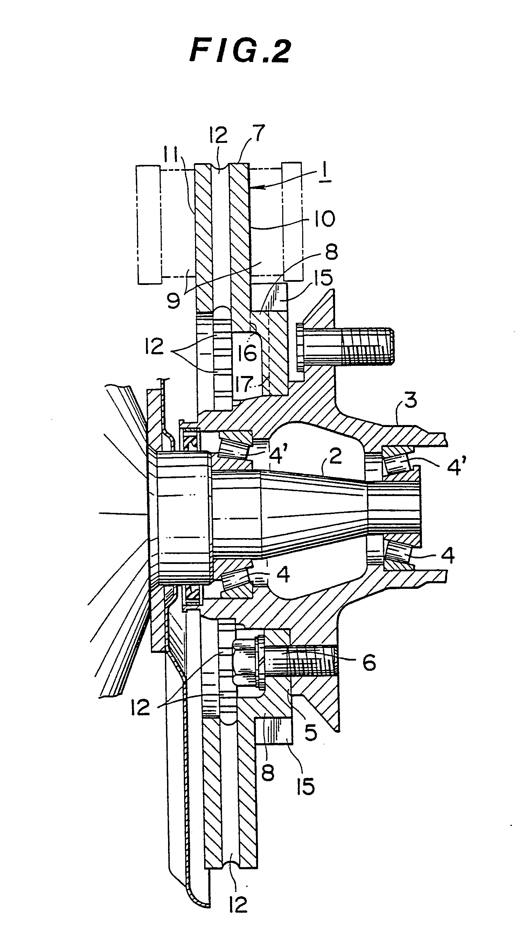

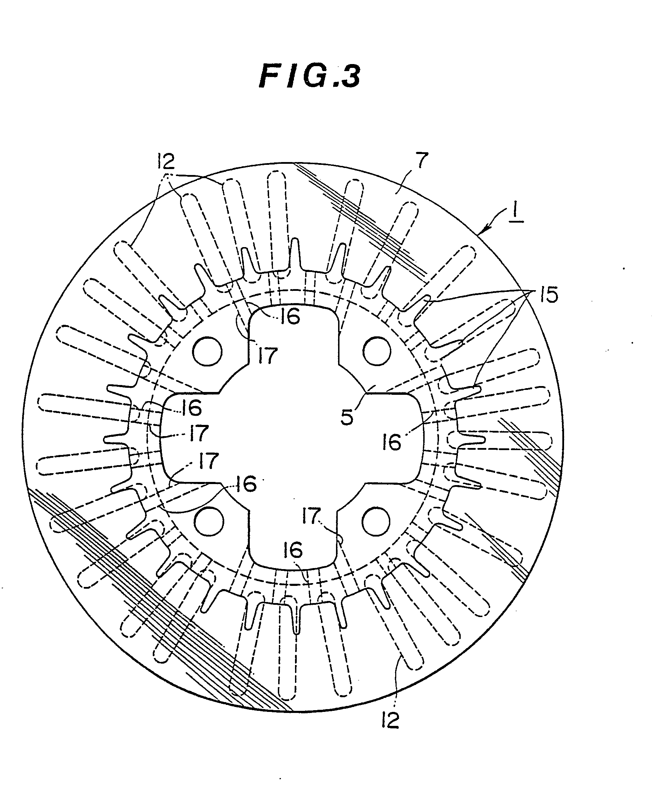

Referring now to Figures 2 and 3, the same references designate the same or corresponding members or parts as in the prior art disc brake rotor shown in Fig. 1.

A disc brake rotor 1 is of a ventilated type and includes a spindle 2, a wheel hub 3 supported through bearings 4, 4' by the spindle 2. A fitting portion 5 of the disc brake rotor 1 is fixed to the wheel hub 3 by means of bolts 6 so that the disc brake rotor 1 can rotate together with a wheel (not shown). A circular brake pad engaging portion 7 is placed in an offset position in the rotation axis direction by means of a step portion 8 extending perpendicular to the fixing portion 5 of the disc brake rotor 1. A pair of brake pads 9 are placed at both sides of the brake pad engaging portion 7 and face opposite brake pad engaging surfaces 10, 11 of the brake pad engaging portion 7. When the brake pads 9 are pressed against the brake pad engaging surfaces 10, 11 of the brake pad engaging portion 7, the brake rotor 1 is braked.

The fitting portion 5 of the disc brake rotor 1 is joined to the brake pad engaging portion 7 by means of the step portion 8 which extends perpendicular thereto in the rotation axis direction.

Many cooling fins 12 are fixed between the brake pad engaging surfaces 10, 11 of the brake pad engaging portion 7 in radial directions. Friction heat produced during braking is transmitted by way of the step portion 8 and the fitting portion 5 to the wheel hub 3 so as to cool the brake rotor 1. The friction heat is radiated by means of the cooling fins 12 into the atmosphere.

A plurality of reinforcing and cooling fins 15 are placed on the outer periphery of the step portion 8. Those fins 15 are positioned separately at regular intervals as best shown in Fig. 3. The fins 15 are fixed at the left end thereof to the brake pad engaging portion 7 as shown in Fig. 2. The fins 15 extend radially in such a manner that the fins 15 are placed partly over the brake pad engaging portion 7 and the fins 12.

Therefore, the rigidity and strength of the disc brake rotor 1 can be increased.

Air ducts (through-holes) 16 for the air flowing purpose are formed in the step portion 8 between the fins 15 in the radius directions. Grooves 17 are formed in the fitting portion 5 so as to be continuously connected with the through-holes 16 whereby air can flow through the through-holes 16 and grooves 17.

In operation, the step portion 5, the fins 15 and brake pad engaging portion 7 are integrally rotated. When the disc brake rotor 1 rotates, air is forcibly produced near the brake pad engaging surface 10 so that the radiation efficiency can be increased. The area in section of the disc brake rotor 1 for the purpose of the heat transmission from the brake pad engaging portion to a support portion can be increased. Thus, the disc brake rotor 1 can be sufficiently cooled. Fade phenomena due to rotor superheatings can be prevented from occurring.

## Claims

1. A ventilated type disc brake rotor (1) attached to a wheel hub (3) by a fitting portion (5), comprising a brake pad engaging portion (7), connected with the fitting portion (5) by a step portion (8), and a plurality of separate fins (15), fixed on the outer periphery of the step portion (8), projecting radially outwards and being fixed at one end to the brake pad engaging portion (7), with air ducts (16) in an intermediate position between each of two adjacent fins (15), characterized in that the air ducts (16) are formed in the step portion (8) and are extending in radial direction, the radially outer mouth of each air duct (16) opening outside of the face (10) of the brake pad engaging portion (7) adjacent the fins (15).

2. A ventilated type disc brake rotor as defined in claim 1, characterized in that grooves (17) are formed in radial direction in the fitting portion (5) to join continuously to the air ducts (16).

## Revendications

1. Un rotor de frein à disque (1) du type ventilé, fixé à un moyeu de roue (3) par une partie d'emmanchement (5), comprenant une partie (7) de contact avec les plaquettes de frein, reliée à la partie d'emmanchement (5) par une partie formant gradin (8), et une pluralité d'ailettes distinctes (15) fixées à la périphérie extérieure de la partie formant gradin (8), saillant radialement vers l'extérieur et fixées à l'une de leurs extrémités à la partie (7) de contact avec les plaquettes de frein, avec des passages d'air (16) dans une position intermédiaire entre les ailettes (15) de chaque paire d'ailettes adjacentes, caractérisé en ce que les passages d'air (16) sont formés dans la partie formant gradin (8) et disposés radialement, l'orifice radialement extérieur de chaque passage d'air (16) débouchant à l'extérieur de la face (10) de la partie (7) de contact avec les plaquettes de frein adjacentes aux ailettes (15).

2. Un rotor de frein à disque du type ventilé tel que défini dans la revendication 1, caractérisé en ce que des gorges (17) sont formées radialement dans la partie d'emmanchement (5) pour rejoindre d'une manière continue les passages d'air (16).

## Patentansprüche

1. Belüfteter Scheibenbremsrotor (1), welcher mittels eines Anschlußteils (5) an einer Radnabe (3) befestigbar ist, mit einem Eingriffsbereich (7) für Bremsbeläge, welcher mit dem Anschlußteil (5) über einen Stufenteil (8) verbunden ist, und mit mehreren separaten Rippen (15), welche am äußeren Umfang des Stufenteils (8) befestigt sind und sich radial nach außen erstrecken und an einem Ende an dem Eingriffsteil (7) für die Bremsbeläge befestigt sind, sowie mit Luftkanälen (16) in einem zwischenliegenden Bereich zwischen jeder von zwei benachbarten Rippen (15), dadurch gekennzeichnet, daß die Luftkanäle (16) in dem Stufenteil (8) ausgebildet sind und sich in radialer Richtung erstrecken, wobei sich die radial äußere Mündung jedes der Luftkanäle (16) außerhalb der Fläche (10) des Eingriffsbereichs (7) für die Bremsbeläge, welcher an die Rippen (15) angrenzt öffnet.

2. Belüfteter Scheibenbremsrotor nach Anspruch 1, dadurch gekennzeichnet, daß Nuten (17) in radialer Richtung in dem Anschlußteil (5) ausgebildet sind, welche kontinuierlich in die Luftkanäle (16) übergehen.

# *FIG.1*
## PRIOR ART

# *FIG.2*

# FIG.3